(19) Europäisches Patentamt

European Patent Office

Office européen des brevets

(11) **EP 4 674 552 A1**

(12) **EUROPEAN PATENT APPLICATION**

(43) Date of publication:
**07.01.2026 Bulletin 2026/02**

(21) Application number: **24186609.4**

(22) Date of filing: **04.07.2024**

(51) International Patent Classification (IPC):
**B23K 9/095** (2006.01)    **B23K 9/173** (2006.01)
**B23K 35/38** (2006.01)    **B23K 31/12** (2006.01)
**B23K 103/04** (2006.01)    **B23K 103/10** (2006.01)
**B23K 101/00** (2006.01)

(52) Cooperative Patent Classification (CPC):
**B23K 9/0953; B23K 9/173; B23K 31/12;
B23K 35/383;** B23K 2101/006; B23K 2103/05;
B23K 2103/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **L'AIR LIQUIDE, SOCIETE ANONYME
POUR L'ETUDE ET
L'EXPLOITATION DES PROCEDES GEORGES
CLAUDE
75007 Paris (FR)**

(72) Inventors:
- **KAYA, Cerkez**
  **47805 Krefeld (DE)**
- **SCHMITZ, Michael**
  **47805 Krefeld (DE)**

(74) Representative: **Air Liquide
L'Air Liquide S.A.
Direction de la Propriété Intellectuelle
75, Quai d'Orsay
75321 Paris Cedex 07 (FR)**

(54) **METHOD FOR MAG WELDING OF LOW-ALLOYED STEELS**

(57) The invention relates to a method of MAG welding of low-alloyed steels, wherein based on a reference shielding gas composition and a reference energy input associated with welding a first material, shielding gas compositions and welding parameters are adjusted.

**EP 4 674 552 A1**

Processed by Luminess, 75001 PARIS (FR)

## Description

TECHNICAL FIELD

The invention relates to a method of MAG welding of low-alloyed steels, in particular with at least 95% iron.

BACKGROUND OF THE INVENTION

MAG welding, or Metal Active Gas welding, is a type of arc welding process where a consumable metal electrode is fed through a welding gun, forming an arc between the electrode and the workpiece. MAG welding is commonly used for joining various metals, including steel, aluminum, and stainless steel, in industries such as automotive, construction, and manufacturing. It offers advantages such as high welding speeds, good penetration, and versatility in welding different thicknesses of materials.

In MAG welding, at process temperatures above 1500°C, it is crucial to shield the liquid welding zone from reacting with the surrounding atmosphere, particularly nitrogen, oxygen, humidity, etc., to prevent adverse reactions with the welding materials. During MAG welding, a shielding gas with an active gas component is also fed through the welding gun to protect the weld pool from atmospheric contamination. The active gas component helps to stabilize the arc and influence the characteristics of the weld. Typically, this is accomplished using argon combined with an active gas component such as carbon dioxide ($CO_2$) and/or oxygen ($O_2$), which significantly impacts the welding process. These active gas components are termed "active" because they react with the liquid metal, oxidizing it, and thereby affecting both the process and the welding outcome.

In joint welding, the effectiveness of the joining process takes precedence. Shielding gases are selected to achieve maximum penetration depth, high deposition rate, thin melt for improved wetting, and reduced pore tendency. This is often attained by incorporating high levels of active gases such as carbon dioxide, oxygen, or combinations of carbon dioxide and oxygen.

However, the use of high levels of active gases results in considerable burn-off of weld metal, primarily from the filler metal, leading to issues such as spatter, silicates and soot. This necessitates additional work steps like interpass cleaning and reworking, and also poses challenges in complying with workplace limits for welding fumes. Smoke is a further issue connected with the burn-off of weld metal. Strong smoke development during welding is harmful to human health because it contains toxic metal fumes, carcinogenic substances, and hazardous gases. Inhalation of these can cause respiratory problems, increase the risk of cancer, and lead to acute and chronic health issues. There is therefore a need to reduce the risks of smoke development.

It is object of the invention to improve work/enviromental safety of MAG welding processes, with additional benefits in quality and efficiency.

SUMMARY OF THE INVENTION

The object of the invention is achieved by a method of MAG welding of low-alloyed steels as defined in claim 1. Preferred embodiments of the invention are defined in the dependent claims.

A method of MAG welding of low-alloyed steels, in particular with at least 95% iron is disclosed herein. A first metal may be provided. The method includes a step a), which includes determining a reference shielding gas composition. The reference shielding gas composition is such that a carbon dioxide ($CO_2$) content [vol%] of the reference shielding gas composition is in the range from 15 vol% to 22 vol%, preferably 18 vol%, wherein the carbon dioxide ($CO_2$) content [vol%] defines an active gas content. The method further includes determining an associated reference energy input into a first material for welding of the first material under the use of the reference shielding gas composition. The energy input in welding refers to the amount of energy transferred into the weld joint and is determined by a plurality of welding parameters, such as the applied welding current or voltage, the weld wire feed speed, the arc length, the pulse frequency, the pulse sequence and/or the pulse shape.

The method further includes a step b), which includes welding the first material using a shielding gas composition that has an active gas content that is reduced compared to the reference shielding gas composition. For the welding, welding parameters that are associated with the energy input into the first material and the composition of the shielding gas are adjusted. According to the invention, the shielding gas composition used for the welding of the first material comprises at least one of oxygen ($O_2$) and carbon dioxide ($CO_2$), herein the oxygen ($O_2$) content [vol%] in the shielding gas composition is less or equal 2 vol% and the carbon dioxide ($CO_2$) content [vol %] in the shielding gas composition is less or equal 4 vol%. The content [vol%] of one of $O_2$ and $CO_2$ may be zero, meaning the shielding gas may comprise one or both of $O_2$ and $CO_2$. The shielding gas composition is further such that the oxygen ($O_2$) content [vol%] of the shielding gas composition multiplied by a factor in the range from 2 to 3, plus a carbon dioxide ($CO_2$) content [vol %] of the shielding gas composition is in the range from 2 vol% to 6 vol%. According to the invention, for welding the first material one or more of the welding parameters are adjusted such that the energy input into the first material is adjusted to a value within the range from 70% to 100%, preferably 80% to 100% of the reference energy input.

Preferably, step a) is carried out taking into account a welding device that is used in step b) for welding the first material, e.g., by using the same welding device for both steps a) and b). This increases the accuracy of energy adjustments. Additionally, parameter adjustments can be made more easily.

A key advantage of the proposed method is reduced smoke development, which results, in particular, from lowering the $CO_2$ content in the shielding gas. This results in a cleaner welding environment with less harmful smoke development, which is beneficial for the welder's health and the overall workplace safety. At the same time, material transfer is improved, and the material transition is more stable. Additionally, the occurrence of combustion by-products is reduced.

The requirement for the shielding gas composition can be formulated as follows:

$$2 \text{ vol\% to } 6 \text{ vol\%} = (O_2 \text{ content [vol\%]} \times \text{factor [2 to 3]}) + CO_2 \text{ content [vol\%]}$$

The content [vol%] of one of $O_2$ and $CO_2$ may be zero, meaning the shielding gas may comprise one or both of $O_2$ and $CO_2$. The oxygen ($O_2$) content [vol%] in the shielding gas composition is less or equal 2 vol% and the carbon dioxide ($CO_2$) content [vol %] in the shielding gas composition is less or equal 4 vol%.

Preferably, the factor is 2.

It is preferred, to choose the welding parameters such that the energy input into the first material is below 100%, preferably below 95%, more preferably below 90% of the reference energy input.

According to a further embodiment of the invention, the oxygen ($O_2$) content [vol%] of the shielding gas multiplied by the factor, plus a carbon dioxide ($CO_2$) content [vol %] of the shielding gas composition is in the range from 2 vol% to 5 vol%. For example, for 4 vol%, this means : 4 vol% = ($O_2$ content [vol%] x factor [2 to 3]) + $CO_2$ content [vol%]. For an active gas content within a range from 2 vol% to 5 vol%, a factor of 2 is preferred. Within the closer ranges, the efficiency of the welding process is significantly increased.

Further embodiments of the invention include specific measures to adjust one or more of the welding parameters that are associated with the energy input, including one or more of the following:

adapting the welding current and/or voltage, wherein it is preferred that the current or voltage are increased, e.g., the maximum voltage may be increased by 10-20A and/or the arc voltage may be increased by 1-2V;

adapting the weld wire feed speed; wherein it is preferred to reduce the wire feed speed;

adjusting the arc length;

adapting the pulse frequency, e.g., by increasing by 5-15Hz, the pulse sequence and/or the pulse shape.

A pulse in the context of arc welding refers to a controlled, time-limited increase in welding current or voltage, resulting in a temporary increase in energy delivered to the arc and, consequently, to the weld pool. Pulsing means that the welding current or voltage alternates between a base level (background current) and a higher level (peak current). Pulse frequency is the number of pulses per second during the welding process, measured in Hertz (Hz). Pulse sequence refers to the timing pattern and order of the pulses. It describes how the pulses are organized within a given time frame. By adjusting the pulse sequence, welders can control specific characteristics of the weld pool and the resulting weld, such as temperature distribution and the size of the molten pool. Pulse shape describes the temporal profile of a single pulse, i.e., how the increase in current or voltage unfolds over time. Examples include rectangular, triangular, or sinusoidal pulses. Different pulse shapes influence how energy is delivered to the material. For example, a rectangular pulse can provide a quick and uniform energy input, while a sinusoidal pulse offers a smoother rise and fall in energy levels.

It is preferred that a combination of parameters is adjusted, which involves setting multiple parameters, with the target being the adjustment of the energy input.

DETAILLED DESCRIPTION

In the following, an exemplary embodiment of the invention is described.

A first material to be welded is provided. The material is a low-alloyed steel having a sheet thickness of 8 mm. Before the material is welded, a reference energy input is determined in a step a), allowing the material to be professionally welded using a reference shielding gas composition. The reference shielding gas composition is argon combined with a carbon dioxide ($CO_2$) content of 18vol%, where the carbon dioxide ($CO_2$) content defines an active gas content. The energy input is determined by a series of welding parameters, such as the welding current or voltage. The determination of the reference energy input is made by using a welding device and my making a reference welding with the first material. The reference welding is made with a wire speed of 8 m/min, a voltage of 28.9 V and a current of 219 A.

After the reference welding, the actual welding of the first material is performed, i.e., in a step b) the first material (8 mm sheet thickness) is welded with said welding device and with an adjusted energy input, i.e., adjusted welding parameters. For this purpose, a different shielding gas composition is chosen that has an active gas content that is reduced compared to the reference shielding gas composition. The shielding gas composition includes argon and 3vol% $CO_2$ and 1vol% $O_2$. The welding parameters are chosen as follows: wire speed of 8.3 m/min, a voltage of 27.3 V and a current of 260 A. In step b), a cleaner welding environment with less harmful smoke development is achieved compared to step a),

## Claims

1. Method of MAG welding of low-alloyed steels, in particular with at least 95% iron, the method comprising the following steps:

   a. determining a reference shielding gas composition, wherein the reference shielding gas composition is such that a carbon dioxide ($CO_2$) content of the reference shielding gas composition is in the range from 15 vol% to 22 vol%, preferably 18 vol%, wherein the carbon dioxide ($CO_2$) content defines an active gas content; and determining an associated reference energy input into a first material for welding of the first material, wherein the reference energy input is determined by a plurality of welding parameters; and
   b. welding the first material using a shielding gas composition that has an active gas content that is reduced compared to the reference shielding gas composition,

      wherein the shielding gas composition comprises at least one of oxygen ($O_2$) and carbon dioxide ($CO_2$), wherein the oxygen ($O_2$) content in the shielding gas composition is less or equal 2 vol% and the carbon dioxide ($CO_2$) content in the shielding gas composition is less or equal 4 vol%;
      wherein the shielding gas composition is further such that the oxygen ($O_2$) content of the shielding gas composition multiplied by a factor in the range from 2 to 3, plus a carbon dioxide ($CO_2$) content of the shielding gas composition is in the range from 2 vol% to 6 vol%; and

      wherein step b) further includes the step of adjusting at least one of the welding parameters for welding the first material such that the energy input into the first material is adjusted to a value within the range from 70% to 100%, preferably 80% to 100% of the reference energy input.

2. Method according to claim 1, wherein the shielding gas composition is such that the oxygen ($O_2$) content of the shielding gas composition multiplied by the factor, plus a carbon dioxide ($CO_2$) content of the shielding gas composition is in the range from 2 vol% to 5 vol%, preferably to 4 vol%.

3. Method according to claim 1 or 2, wherein the factor is 2.

4. Method according to any of the preceding claims, wherein the step of adjusting the one or more welding parameters includes one or more of the following:

   adapting the welding current or voltage;
   adapting the weld wire feed speed;
   adjusting the arc length;
   adapting the pulse frequency, the pulse sequence and/or the pulse shape.

5. Method according to any of the preceding claims, wherein steps a) and b) are carried out using the same welding device, or at least welding devices with substantially corresponding technical specifications.

Europäisches
Patentamt

European
Patent Office

Office européen
des brevets

## EUROPEAN SEARCH REPORT

**Application Number**

EP 24 18 6609

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PIRES I. ET AL: "Fume emissions during gas metal arc welding", TOXICOLOGICAL AND ENVIRONMENTAL CHEMISTRY, vol. 88, no. 3, 1 February 2007 (2007-02-01), pages 385-394, XP093235152, GB ISSN: 0277-2248, DOI: 10.1080/02772240600720472 * abstract * * page 387, paragraph 2-4; figure 1; tables I, II, IV * * last paragraph; page 390 * * Conclusions; page 393 - page 394 * | 1-5 | INV. B23K9/095 B23K9/173 B23K35/38 B23K31/12 B23K103/04 B23K103/10 B23K101/00 |
| A | EP 4 306 253 A1 (JFE STEEL CORP [JP]) 17 January 2024 (2024-01-17) * paragraphs [0042], [0043]; claim 4 * | 1 | |
| A | CA 2 260 118 A1 (ILLINOIS TOOL WORKS [US]) 17 August 1999 (1999-08-17) * claims 1, 32, 45 * | 1 | TECHNICAL FIELDS SEARCHED (IPC) B23K |
| A | EP 3 492 208 A1 (KOBE STEEL LTD [JP]) 5 June 2019 (2019-06-05) * paragraphs [0079], [0125]; claim 1 * | 1 | |

The present search report has been drawn up for all claims

| Place of search | Date of completion of the search | Examiner |
|---|---|---|
| Munich | 19 December 2024 | Péridis, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 24 18 6609

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2024

| Patent document cited in search report | | Publication date | Patent family member(s) | | Publication date |
|---|---|---|---|---|---|
| EP 4306253 | A1 | 17-01-2024 | CN | 117177830 A | 05-12-2023 |
| | | | EP | 4306253 A1 | 17-01-2024 |
| | | | JP | 7364087 B2 | 18-10-2023 |
| | | | JP | WO2022230903 A1 | 03-11-2022 |
| | | | KR | 20230154325 A | 07-11-2023 |
| | | | US | 2024376918 A1 | 14-11-2024 |
| | | | WO | 2022230903 A1 | 03-11-2022 |
| CA 2260118 | A1 | 17-08-1999 | CA | 2260118 A1 | 17-08-1999 |
| | | | DE | 69929654 T2 | 20-07-2006 |
| | | | EP | 0936019 A2 | 18-08-1999 |
| | | | JP | H11267835 A | 05-10-1999 |
| | | | US | 6087626 A | 11-07-2000 |
| | | | US | 6326591 B1 | 04-12-2001 |
| | | | US | 2002079302 A1 | 27-06-2002 |
| | | | US | 2003085210 A1 | 08-05-2003 |
| | | | US | 2004238513 A1 | 02-12-2004 |
| | | | US | 2006163229 A1 | 27-07-2006 |
| | | | US | 2008006616 A1 | 10-01-2008 |
| | | | US | 2010006552 A1 | 14-01-2010 |
| EP 3492208 | A1 | 05-06-2019 | CA | 3031596 A1 | 01-02-2018 |
| | | | CN | 109475959 A | 15-03-2019 |
| | | | EP | 3492208 A1 | 05-06-2019 |
| | | | JP | 6619300 B2 | 11-12-2019 |
| | | | JP | 2018015779 A | 01-02-2018 |
| | | | KR | 20190015579 A | 13-02-2019 |
| | | | US | 2019270157 A1 | 05-09-2019 |
| | | | WO | 2018021090 A1 | 01-02-2018 |

EPO FORM P0459

For more details about this annex : see Official Journal of the European Patent Office, No. 12/82